(19) Europäisches Patentamt

European Patent Office

Office européen des brevets

(11) EP 1 555 842 A1

(12) DEMANDE DE BREVET EUROPEEN

(43) Date de publication:
20.07.2005 Bulletin 2005/29

(51) Int Cl.$^7$: H04Q 7/36

(21) Numéro de dépôt: 04290079.5

(22) Date de dépôt: 13.01.2004

(84) Etats contractants désignés:
AT BE BG CH CY CZ DE DK EE ES FI FR GB GR HU IE IT LI LU MC NL PT RO SE SI SK TR
Etats d'extension désignés:
AL LT LV MK

(71) Demandeur: FRANCE TELECOM
75015 Paris (FR)

(72) Inventeurs:
• Daviaud, Anne
  91620 Nozay (FR)
• Dubreil, Hervé
  75013 Paris (FR)

(74) Mandataire: Loisel, Bertrand et al
Cabinet Plasseraud
65/67 rue de la Victoire
75440 Paris Cedex 09 (FR)

(54) Procédé de détermination de la capacité radio d'un réseau de télécommunication cellulaire

(57) Pour déterminer la capacité d'un réseau de télécommunication cellulaire de type CDMA à supporter un trafic multiservices entre des postes mobiles cellulaires et une station de base avec laquelle communiquent les postes mobiles, on estime un facteur d'interférence intercellulaire du réseau, on détermine un niveau de puissance transmis à partir du facteur d'interférence estimé et l'on détermine une probabilité de dysfonctionnement du réseau.

Le facteur d'interférence est estimé sous la forme d'une variable aléatoire lognormale ou normale.

## FIG.1

**Description**

L'invention concerne les réseaux de télécommunication cellulaire et, en particulier, les réseaux de télécommunication de type CDMA (« Code Division Multiple Access »), c'est-à-dire les systèmes de télécommunication par ondes radioélectriques à accès multiples par répartition en codes.

Plus particulièrement, l'invention concerne la détermination de la capacité radio d'un réseau de télécommunication cellulaire CDMA. Selon une application particulièrement intéressante, l'invention est utilisée pour déterminer la capacité radio d'un réseau mobile fondé sur la technologie W-CDMA (« Wideband Code Division Multiple Access ») ou à accès multiples par répartition en codes à large bande, pour lequel la bande de fréquences selon laquelle les données sont transmises est élargie afin de permettre la transmission d'un plus grand volume de données.

Le problème de la détermination de la capacité radio d'un réseau de télécommunication CDMA ou, de manière particulière d'un réseau W-CDMA, est un problème qui se pose de manière cruciale lorsque l'on procède au dimensionnement d'un réseau. Comme on le conçoit, la capacité du réseau doit être estimée aussi bien dans le sens montant, c'est-à-dire des postes de télécommunication vers les éléments du réseau avec lesquels ces derniers communiquent, mais également dans le sens descendant, c'est-à-dire des stations de base vers les postes mobiles. Par ailleurs, afin de pouvoir dimensionner le réseau de manière adéquate, il est nécessaire d'être en mesure d'estimer la capacité du réseau aussi bien dans un environnement mono-service, que dans un environnement multiservices, c'est-à-dire un environnement dans lequel on met en oeuvre des applications différentes qui nécessitent chacune des débits spécifiques, afin d'être en mesure de déterminer la capacité limite de fonctionnement du réseau pour l'ensemble des services qu'il est destiné à supporter.

Il existe, dans l'état de la technique, diverses méthodes permettant d'estimer de manière analytique la capacité radio d'un réseau CDMA, en particulier d'un réseau W-CDMA, dans un environnement multiservices.

On pourra à cet effet se référer au document intitulé « Forward-link capacity of a DS/CDMA system with mixed multirate sources », IEEE Transactions on Vehicular Technology, vol. 50, no 3, Mai 2001, qui décrit une méthode de détermination de la capacité d'un réseau cellulaire à supporter un niveau de charge, en vue du dimensionnement des cellules du réseau. Cette technique est essentiellement basée sur la détermination des pics de charge que le réseau peut supporter tout en maintenant une qualité de service prédéterminée.

Selon cette technique, le trafic est modélisé par des variables aléatoires et la capacité radio du réseau est estimée en fonction du nombre de trajets permettant de reconstituer un signal, de la puissance reçue sur chacun de trajets, de la valeur maximale tolérée de la probabilité de dysfonctionnement et des caractéristiques du facteur d'interférence du réseau.

Cette technique présente un certain nombre d'inconvénients majeurs. En particulier cette technique n'est adaptée que pour déterminer la capacité radio du réseau dans le sens descendant, c'est-à-dire des stations de base vers les postes mobiles. En outre, la solution préconisée nécessite de prendre en compte des facteurs pour lesquels il est très difficile de disposer d'une valeur exacte. C'est en particulier le cas du nombre de trajets retenus par le récepteur « Rake » pour la recombinaison du signal, de la puissance reçue sur chaque trajet, d'un coefficient pondérateur du pire cas pour l'estimation du facteur d'interférence moyen sur la cellule. Ainsi, les approximations réalisées ne permettent pas d'obtenir une précision suffisante dans les résultats obtenus.

Au vu de ce qui précède, le but de l'invention est de pallier les inconvénients précités, et de fournir un procédé de détermination de la capacité radio d'un réseau de télécommunication cellulaire de type CDMA, permettant un dimensionnement précis des cellules du réseau, en fournissant une probabilité de dysfonctionnement du réseau pour une charge donnée ou une charge maximale du réseau pour une probabilité de dysfonctionnement spécifiée, et ce aussi bien dans le sens montant que dans le sens descendant.

L'invention a donc pour objet un procédé de détermination de la capacité radio d'un réseau de télécommunication cellulaire de type CDMA, pour la détermination de la capacité du réseau à supporter un trafic multiservices entre des postes mobiles cellulaires et une station de base avec laquelle communiquent les postes mobiles, comprenant les étapes d'estimation du facteur d'interférence inter-cellulaire du réseau, de détermination d'un niveau de puissance transmis à partir du facteur d'interférence estimé et de détermination d'une probabilité de dysfonctionnement du réseau.

Le facteur d'interférence est estimé sous la forme d'une variable aléatoire lognormale ou gaussienne.

Un tel procédé permet de tenir compte de la sectorisation des cellules d'un réseau CDMA mais également, en raison de l'estimation du facteur d'interférence sous la forme d'une variable aléatoire lognormale ou gaussienne, de tenir compte de l'affaiblissement des signaux non seulement dû à la distance séparant un poste mobile de la station de base, mais également en raison des effets de masque qui engendrent des trous de couverture aléatoires dans les réseaux.

Comme indiqué précédemment, ce procédé peut être utilisé pour la détermination de la capacité du réseau à supporter un trafic multiservices descendant, c'est-à-dire de la station de base du réseau vers le poste mobile. Dans ce cas, le facteur d'interférence est estimé sous la forme d'une variable aléatoire lognormale.

Dans ce cas également, selon un mode de mise en oeuvre, le procédé selon l'invention comprend les étapes consistant à :

- diviser chaque cellule en mailles élémentaires ;
- pour chaque maille, calculer la probabilité pour le poste mobile d'être situé dans cette maille ;
- calculer l'espérance et la variance du facteur d'interférence ;
- calculer la portion de la puissance de la station de base requise pour les postes mobiles, en fonction du service mis en oeuvre ; et
- calculer la probabilité de dysfonctionnement.

Selon une caractéristique de ce procédé, la probabilité de dysfonctionnement est calculée à partir de la probabilité que la puissance requise par l'ensemble des postes mobiles qui communiquent avec la station de base ne dépasse pas la puissance disponible pour la station de base, et que la puissance requise pour chaque poste mobile ne soit pas en dehors de bornes minimale et maximale.

Le procédé peut également être utilisé pour la détermination de la capacité du réseau à supporter un trafic multiservices des postes mobiles vers la station de base. Dans ce cas, le facteur d'interférence est estimé sous la forme d'une variable aléatoire gaussienne.

Dans ce cas également, selon un mode de mise en oeuvre, ce procédé comporte les étapes consistant à :

- fixer à zéro la moyenne et la variance de l'interférence intercellulaire ;
- pour la cellule centrale dans laquelle se situe la station de base considérée isolément, calculer la moyenne et la variance de la puissance reçue des postes mobiles ;
- affecter la valeur calculée de la moyenne et de la variance de la puissance reçue aux cellules voisines de la cellule centrale ;
- calculer la moyenne et la variance de l'interférence intercellulaire ;
- calculer la moyenne et la variance, pour chaque service, de la puissance reçue des postes mobiles, par la station de base ; et
- calculer la probabilité de dysfonctionnement.

Selon une caractéristique de ce procédé, les étapes définies ci-dessus sont réalisées de manière itérative. On calcule en outre une différence entre la moyenne et la variance de l'interférence intercellulaire d'une itération courante et la moyenne et la variance de l'interférence inter-cellulaire d'une itération précédente, l'étape de calcul de la probabilité de dysfonctionnement étant effectuée dès que ladite différence est inférieure à une valeur de seuil prédéterminée.

Selon un mode de mise en oeuvre, dans une procédure itérative, on calcule en outre une différence entre la moyenne et la variance, pour chaque service, de la puissance reçue des postes mobiles par la station de base de la cellule centrale d'une itération courante et la moyenne et la variance, pour chaque service, de la puissance reçue des postes mobiles par la station de base de la cellule centrale d'une itération précédente, l'étape de calcul de la probabilité de dysfonctionnement étant effectuée dès que ladite différence est supérieure à une valeur de seuil prédéterminée.

Selon une autre caractéristique du procédé selon l'invention, au cours de l'étape de calcul de la probabilité de dysfonctionnement, on calcule la probabilité que les postes mobiles émettent à une puissance supérieure à une valeur maximale de seuil.

On peut également calculer la moyenne et la variance de l'interférence inter-cellulaire en utilisant des fonctions qui dépendent des effets de masque dans le réseau.

Le procédé selon l'invention permet ainsi de fixer un niveau de charge multiservices pour le réseau et de calculer la probabilité de dysfonctionnement pour ce niveau de charge.

On peut également se fixer une probabilité de dysfonctionnement cible pour le réseau et un niveau de charge initial. Dans ce cas, on calcule la probabilité de dysfonctionnement pour le niveau de charge initial et l'on modifie les niveaux de charge, ces étapes étant répétées jusqu'à l'obtention de la probabilité de dysfonctionnement cible.

D'autres buts, caractéristiques et avantages de l'invention apparaîtront à la lecture de la description suivante, donnée uniquement à titre d'exemple non-limitatif, et faite en référence aux dessins annexés, sur lesquels :

- la figure 1 est un organigramme illustrant un premier mode de mise en oeuvre de l'invention, utilisé pour calculer la probabilité de dysfonctionnement d'un réseau W-CDMA ;
- la figure 2 est un organigramme détaillant le procédé de la figure 1, pour le sens descendant ;
- la figure 3 est un organigramme détaillant le procédé de la figure 1, dans le sens montant ;
- la figure 4 est un organigramme illustrant un deuxième mode de mise en oeuvre d'un procédé selon l'invention ;
- la figure 5 détaille le procédé de la figure 4 pour la détermination de la capacité du réseau dans le sens descendant ;

et

- la figure 6 est un organigramme détaillant le procédé de la figure 4, pour la détermination de la capacité radio du réseau dans le sens montant.

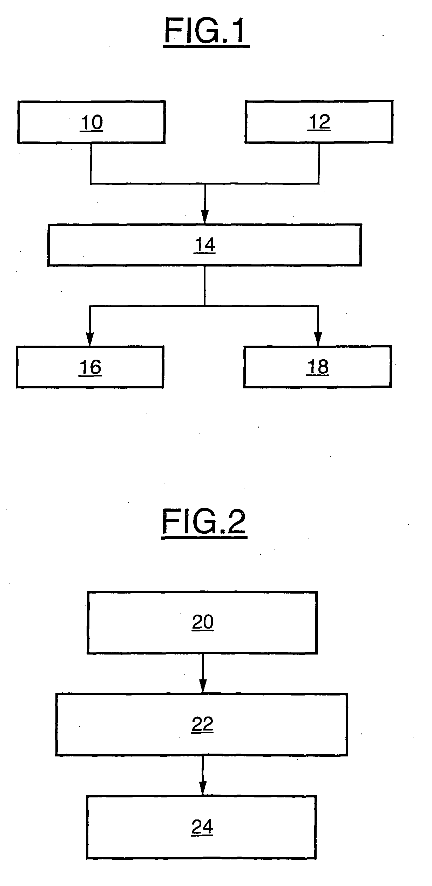

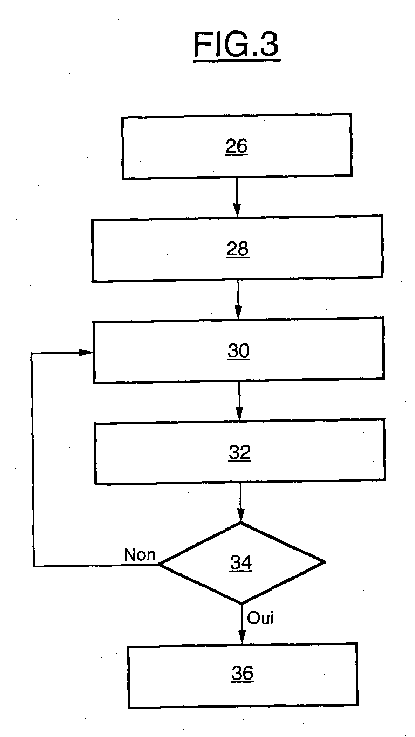

La figure 1 représente le principe général du premier mode de réalisation de l'invention, qui consiste à évaluer un critère de qualité de service, c'est-à-dire la probabilité de dysfonctionnement, associé à une charge de trafic à écouler, dans une cellule d'un système radio W-CDMA. L'estimation de cette probabilité se découpe en deux parties complémentaires, pour le sens descendant d'une part, et pour le sens montant d'autre part, qui seront décrites ci-dessous en référence aux figures 2 et 3, respectivement.

Selon ce premier mode de réalisation, dans une première étape 10 on fixe les paramètres d'entrée du procédé.

Les paramètres d'entrée sont les suivants :

- le nombre de classes de service retenues pour le système CDMA étudié ;
- pour chaque service : le facteur d'orthogonalité pour le service et le canal multi trajet considérés ; le débit du service ; le facteur d'activité ; la puissance maximale émise par un mobile ; les puissances minimale et maximale qu'une station de base peut dédier à un utilisateur ; et la charge moyenne de trafic en Erlang ;
- la largeur de bande après étalement ;
- la densité spectrale de puissance du bruit thermique ;
- le gain d'antenne normalisé pour les stations de base;
- la valeur de l'exposant de l'atténuation ;
- l'écart-type de l'effet de masque ou « shadowing » ; et
- la portion de la puissance totale de la station de base réservée aux canaux de trafic.

On fixe également le rapport signal/bruit (Eb/Nt) cible pour un mobile de la classe de service considérée et en fonction du canal multi-trajet ainsi que la charge moyenne à écouler par service (étape 12). On calcule alors, lors de l'étape 14 suivante, la valeur de la probabilité de dysfonctionnement associée à la charge de trafic à écouler, sur le sens montant (étape 16), et sur le sens descendant (étape 18), dans l'environnement décrit par l'ensemble des paramètres ci-dessus.

Les principales hypothèses retenues pour la modélisation sont les suivantes :

- Le motif cellulaire est hexagonal.
- Les sites sont tri-sectoriels.
- Les utilisateurs sont uniformément distribués dans le réseau.
- Le nombre d'utilisateurs $K_S$ de chaque service S d'un ensemble Ns de services (avec S=1,...,$N_S$,) est une variable aléatoire de Poisson.
- Le trafic est modélisé par des sources caractérisées par un facteur d'activité $v_s$ pour le service $s$.
- Le contrôle de puissance est parfait, c'est-à-dire que le rapport signal/bruit (SIR) requis est atteint sans erreur.
- Sur le sens descendant, la non-orthogonalité du réseau est prise en compte par un facteur d'orthogonalité $a_s$ pour le service $s$.
- On suppose que l'atténuation entre une station mobile (MS) et le secteur $a$ de la station de base $m$ est proportionnelle à :

$$L_m^{(a)} \propto d_m^{-1}.10^{\xi_m/10}.A_m^{(a)}(\beta)$$

$$L_m^{(a)} \propto d_{m.}^{-1}.\chi_m.A_m^{(a)}(\beta)$$

dans lesquelles :

- $d_m$ est la distance entre le mobile et la station de base (BS) $m$,
- $l$ est l'exposant de l'atténuation (en général 4),
- $\xi_m$ est une variable aléatoire gaussienne de moyenne nulle et d'écart-type σ, représentant l'effet de masque (typiquement σ est compris entre 6 et 10 dB),
- $\chi_m$ est une variable aléatoire lognormale,
- β est l'angle entre l'azimut du secteur et la direction MS-BS, et
- $A_m^{(a)}$ est le gain d'antenne normalisé, représentant l'effet des antennes directionnelles pour les nodes B tri-sectoriels du réseau (égal à 1 si β=0, à une valeur entre 0 et 1 sinon).

La corrélation spatiale de l'effet de masque est définie par la relation :

$$\xi_m = a\zeta + b\zeta_m$$

dans laquelle $a^2+b^2=1$ et

$$E[\xi_m] = E[\zeta] = E[\zeta_m] = 0$$

$$V[\xi_m] = V[\zeta] = V[\zeta_m] = \sigma^2$$

$$E[\xi_m\xi_k] = 0 \text{ si } m \neq k$$

En se référant à la figure 2, on va maintenant détailler la procédure de détermination de la probabilité de dysfonctionnement pour une charge donnée, dans le sens descendant.

Comme on le voit sur la figure 2, cette procédure comporte trois phases principales 20, 22 et 24.

Au cours de la première phase 20, on estime la moyenne et la variance du facteur d'interférence du réseau dans le sens descendant.

Pour ce faire, on divise la cellule étudiée en mailles fines. Pour chaque maille, on calcule la probabilité pour un mobile d'être situé dans cette maille. A cet effet, on considère que les postes mobiles du réseau sont répartis dans le réseau suivant une loi de probabilité uniforme.

Pour chaque centre de maille $M_i$, on calcule l'espérance et la variance du facteur d'interférence $F_i$ dans le sens descendant. A cet effet, on calcule le rapport de la puissance totale reçue des stations de base interférentes sur la puissance totale reçue de la station serveuse pour le secteur considéré. On notera que, pour procéder à ce calcul, on modélise l'effet de masque qui engendre des trous de couverture dans le réseau en utilisant une variable aléatoire lognormale. Ceci permet d'approximer le facteur d'interférence par une variable aléatoire lognormale dont on sait calculer l'espérance et la variance, par diverses méthodes à la portée d'un homme du métier.

Les valeurs ainsi calculées représentent les espérances et les variances conditionnelles du facteur d'interférence global sur l'ensemble de la cellule F, conditionnées sur la variable aléatoire uniforme $M_i$. On peut ainsi déduire l'espérance et la variance du facteur d'interférence global, E[F] et V[F].

Une variante consiste à calculer en chaque maille la probabilité pour un module d'être en macro-diversité. Il est alors possible de disposer des caractéristiques de deux facteurs d'interférence distincts correspondant l'un au mobile en macro-diversité et l'autre au mobile relié uniquement à sa cellule serveuse.

Au cours de la deuxième phase 22, on calcule la moyenne et la variance de la portion de puissance de la station serveuse requise pour chaque mobile, en fonction de son service.

En négligeant le bruit thermique, la portion de puissance $\phi_t^{(s)}$ requise pour un poste mobile i et pour une classe de service s est donnée par la relation suivante :

$$\phi_i^{(s)} = \frac{\gamma_s R_s}{W\psi + \gamma_s R_s \alpha_s \psi} \times (F + \alpha_s)$$

dans laquelle ;

- $\gamma_s$ est le rapport signal/bruit Eb/Nt requis pour le service $s$,
- $R_s$ est le débit du service $s$,
- $W$ est la largeur de bande après étalement, et
- $\Psi$ est la fraction de la puissance totale de la station de base BS dédiée aux canaux de trafic.

On déduit donc directement l'espérance et la variance de la portion de puissance requise par mobile pour obtenir le rapport Eb/Nt requis, en fonction du service s.

Au cours de la troisième phase 24, pour le calcul de la probabilité de dysfonctionnement, on définit deux évènements E1 et E2 suivants :

- E1 : « la puissance requise par l'ensemble des postes mobiles ne dépasse pas la puissance totale disponible au niveau de la station serveuse pour les canaux de trafic » ; et

- E2 : « pour chaque service s, la puissance requise se situe entre les bornes minimale et maximale imposées ».

Ces deux événements peuvent être exprimés en fonction de la portion de puissance requise pour délivrer correctement un service s à un poste mobile parmi l'ensemble des services, c'est-à-dire pour s compris entre 1 et $N_s$.

La condition E1 correspond à la relation :

$$\sum_{i=1}^{K_1} v_1 \phi^{(1)} + \sum_{i=1}^{K_2} v_2 \phi^{(2)} + \cdots + \sum_{i=1}^{K_{N_s}} v_{N_s} \phi^{(N_s)} < 1$$

Et la condition E2 équivaut à la relation :

$$\text{Pour tout } s \in \{1,\ldots,N_s\}, \phi^{(s)} \in \left[ \underset{\min}{\phi(s)}; \underset{\max}{\phi(s)} \right]$$

On considère que si l'un de ces événements n'est pas réalisé, le système présente un dysfonctionnement.

La probabilité de dysfonctionnement $P_{dys}$ vaut donc :

$$P_{dys} = 1 - \Pr[E_1 \cap E_2]$$

A partir des définitions de E1 et E2 indiquées ci-dessus, il est possible d'exprimer chaque contrainte par une condition sur la variable aléatoire lognormale $F$. En conditionnant la probabilité $\Pr[E1 \cap E2]$ sur la valeur des variables aléatoires $K_s$, on en déduit directement la valeur de $P_{dys}$.

En référence à la figure 3, dans le sens montant, c'est-à-dire des postes mobiles vers la station de base, lors d'une première étape d'initialisation 26, on procède à un isolement de la cellule considérée en fixant la moyenne et la variance de l'interférence inter-cellulaire à zéro.

On calcule alors la moyenne et la variance de la puissance reçue des postes mobiles au niveau de la station de base, pour chaque service, pour cette cellule isolée. On notera que la puissance reçue est identique pour tous les mobiles ayant le même service mais variable selon le niveau d'interférence totale. On exprime alors la puissance instantanée reçue par service à partir des équations de lien et du contrôle de puissance parfait basé sur le rapport signal sur bruit (dans le cas de deux services actifs) :

$$H_1 = \frac{\gamma_1 R_1}{\Delta} \left( 1 + \frac{\gamma_2 R_2}{W} \right) \eta_0 \text{ et } H_2 = \frac{\gamma_2 R_2}{\Delta} \left( 1 + \frac{\gamma_1 R_1}{W} \right) \eta_0$$

dans lesquelles :

- $\gamma_s$ est le rapport signal/bruit cible pour le service s,
- $R_s$ est le débit s,
- $W$ est la largeur de bande,
- $\eta_0$ est la densité spectrale de bruit thermique, et
- $\Delta$ est exprimé par la relation :

$$\Delta = 1 - \frac{\gamma_1 R_1}{W} (K_1 - 1) - \frac{\gamma_2 R_2}{W} (K_2 - 1) - \frac{\gamma_1 R_1 \gamma_2 R_2}{W^2} (K_1 + K_2 - 1)$$

Au cours des étapes 30, 32 et 34 suivantes, on met en oeuvre un algorithme itératif.

En considérant la moyenne et la variance de l'interférence inter-cellulaire dans le sens montant déterminées ci-dessus, on calcule la moyenne et la variance pour chaque service de la puissance reçue des postes mobiles au niveau de la station de base (node B) de la cellule centrale, en exprimant la puissance instantanée reçue au node B par service, à partir des équations de lien et du contrôle de puissance parfait basé sur le rapport signal/bruit (par exemple dans le cas de deux services actifs) avant de moyenner :

$$H_1 = \frac{\gamma_1 R_1}{\Delta}\left(1 + \frac{\gamma_2 R_2}{W}\right)\left(\eta_0 + \frac{I_{OC}}{W}\right) \text{ et } H_2 = \frac{\gamma_2 R_2}{\Delta}\left(1 + \frac{\gamma_1 R}{W}\right)\left[\eta_0 + \frac{I_{OC}}{W}\right]$$

On évalue la différence entre la moyenne et la variance de l'interférence inter-cellulaire dans le sens montant de l'itération courante et celles de l'itération précédente ainsi que la différence entre la moyenne et la variance pour chaque service de la puissance reçue des stations mobiles au niveau du node B de la cellule centrale de l'itération courante et celles de l'itération précédente (étape 34). Si les différences calculées sont inférieures à un seuil de convergence prédéterminé, on procède au calcul de la probabilité de dysfonctionnement (étape 36). Dans le cas contraire, la procédure retourne à l'étape 30.

Le calcul de la probabilité de dysfonctionnement est effectué à partir de deux conditions. La première condition permet de vérifier que le système d'équations du contrôle de puissance peut avoir une solution (c'est-à-dire $\Delta > 0$).

La deuxième condition permet de vérifier qu'il n'y a pas de saturation à l'émission dans la liaison montante, c'est-à-dire que les postes ou stations mobiles transmettent toutes à une puissance inférieure à la puissance maximale.

Ces deux conditions sont données par la relation :

$$P_{dys} = v_s \times Pr\{\text{Au moins un mobile du service s transmet une puissance}$$

$$\text{supérieure à } E_{s,max} \mid \Delta > 0\}.Pr\{\Delta > 0\} + Pr\{\Delta \leq 0\}$$

dans laquelle $E_{s,max}$ est la puissance maximale de transmission des stations mobiles pour le service s et $v_s$ est le facteur d'activité du service s. Cette probabilité de saturation à l'émission, c'est-à-dire la probabilité pour que les mobiles émettent à une puissance supérieure à une valeur de seuil, peut également être exprimée sous la forme :

$$Pr\left\{\exists s, E_s > E_{s,max} \mid \Delta > 0\right\} = \iint\limits_{Cell0}\left(\frac{1}{2}\int\limits_{-\infty}^{+\infty}erfc\left(\frac{I_{min}(\xi_0) - m_1}{\sqrt{2\sigma_I^2}}\right)Pr\{\xi_0\}d\xi_0\right)Pr\{X \in A \mid \Delta > 0\}dA$$

où $I_{min}$ est une fonction des paramètres de l'effet de masque et de gain d'antenne, de la largeur de bande W, de $\Delta$, et des paramètres $\gamma_s$, $R_s$ et $E_{e,max}$ pour les différents services $s$.

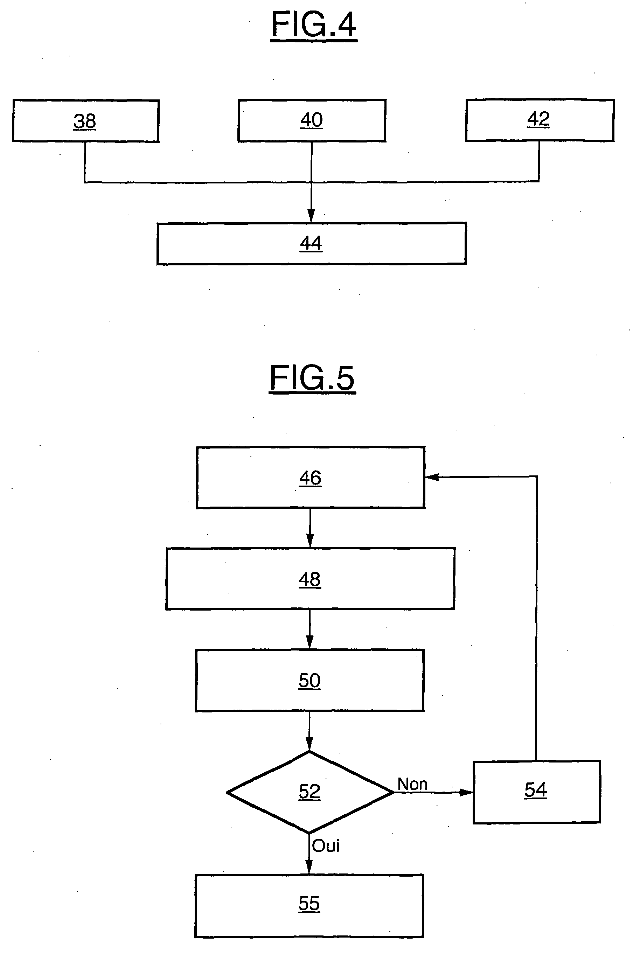

On va maintenant décrire en référence aux figures 4, 5 et 6 un autre mode de mise en oeuvre d'un procédé selon l'invention.

La figure 4 présente le principe général du second mode de réalisation de l'invention, qui consiste à évaluer la capacité d'Erlang d'une cellule d'un système radio CDMA obtenue pour une valeur cible du critère de qualité de service, c'est-à-dire la probabilité de dysfonctionnement. La méthode est fondée sur celle décrite dans le premier mode de réalisation. Les hypothèses retenues sont donc les mêmes, et ne sont pas rappelées ici. Quant aux entrées nécessaires, elles diffèrent simplement par le fait que l'on fixe, outre les valeurs des paramètres d'entrée (étape 38), une valeur initiale de charge moyenne de trafic à écouler par service (étape 40), et que l'on ajoute une nouvelle entrée, à savoir la valeur cible de la probabilité de dysfonctionnement pour laquelle on veut estimer la capacité, sur les sens montant et descendant (étape 42).

A partir de ces entrées, lors de l'étape 44 suivante, on calcule la charge moyenne de trafic (en Erlang) que l'on peut écouler sur le sens montant et sur le sens descendant, en atteignant les seuils fixés sur chacun des sens pour la probabilité de dysfonctionnement. Dans un cas à $n$ services, on obtient la capacité d'Erlang, c'est-à-dire l'ensemble des $n$-uplets de valeurs de charge moyenne de trafic par service qui maintiennent la probabilité de dysfonctionnement au niveau cible, pour le sens montant et le sens descendant.

En référence à la figure 5, sur le sens descendant, la capacité radio d'un système CDMA est estimée par la méthode suivante.

Les trois étapes initiales sont identiques à celles décrites précédemment en référence à la figure 2.

Lors d'une première étape 46, on procède à une estimation de la moyenne et de la variance du facteur d'interférence dans le sens descendant. On effectue alors un calcul de la moyenne et de la variance de la portion de puissance de la station serveuse requise pour chaque mobile, en fonction de son service (étape 48), et un calcul de la probabilité de dysfonctionnement (étape 50).

Selon ce second mode de réalisation de l'invention, il existe une boucle supplémentaire, qui consiste à comparer la probabilité de dysfonctionnement à la valeur cible fixée initialement (figure 4) et, si cette probabilité cible n'est pas atteinte, à modifier le trafic moyen à écouler (étape 54) pour obtenir une nouvelle valeur de probabilité de dysfonctionnement, et à retourner à l'étape 46 précédente. On itère ainsi jusqu'à obtenir une valeur cible.

Dans un environnement à $n$ services, une simplification consiste à calculer d'emblée la probabilité de dysfonctionnement pour un ensemble de n-uplets de valeurs de charge moyenne à écouler par service. Ensuite, on cherche, parmi toutes les valeurs obtenues , les valeurs les plus proches de la probabilité cible. La capacité d'Erlang est alors l'ensemble des n-uplets qui donnent une probabilité de dysfonctionnement très proche de la valeur cible (étape 55).

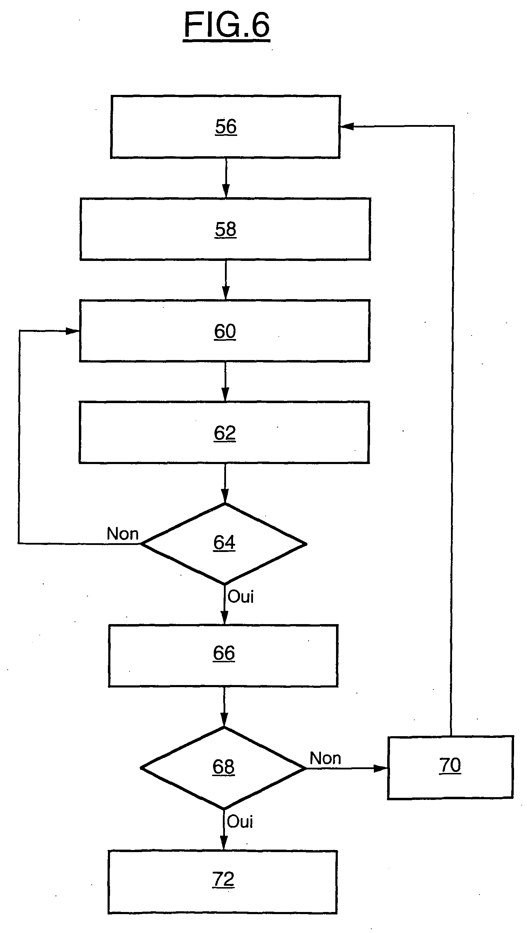

Dans le sens montant, en référence à la figure 6, la capacité radio d'un système CDMA est estimée par la méthode suivante.

On procède tout d'abord à des phases d'initialisation 56 et 58, similaires aux phases 26 et 28 décrites précédemment, en supposant l'interférence inter-cellulaire nulle. On met alors en oeuvre un algorithme de convergence, similaire aux phases 30, 32 et 34 décrites précédemment en référence à la figure 3, basé sur les expressions de l'interférence inter-cellulaire et des puissances reçues des stations mobiles par le node B pour chaque service (étapes 60, 62, 64). Après obtention d'une convergence, on calcule la probabilité de dysfonctionnement (étape 66). Lors de l'étape 68 suivante, on compare la probabilité de dysfonctionnement calculée avec la probabilité de dysfonctionnement cible et l'on retourne à l'étape 56 si la valeur cible n'est pas atteinte (étape 68).

Dans ce second mode de réalisation de l'invention, il existe donc une boucle supplémentaire, qui consiste à comparer la probabilité de dysfonctionnement à la valeur cible fixée initialement (figure 4), et, si cette probabilité cible n'est pas atteinte, à modifier le trafic moyen à écouler (étape 70) pour obtenir une nouvelle valeur de probabilité de dysfonctionnement. On itère ainsi jusqu'à obtenir la valeur cible.

Comme sur le lien descendant, dans un environnement à n services, une simplification consiste à calculer d'emblée la probabilité de dysfonctionnement pour un ensemble de n-uplets de valeurs de charge moyenne à écouler par service. Ensuite, on cherche parmi toutes les valeurs obtenues les valeurs les plus proches de la probabilité cible. La capacité d'Erlang est alors l'ensemble des $n$-uplets qui donnent une probabilité de dysfonctionnement très proche de la valeur cible (étape 72).

**Revendications**

1. Procédé de détermination de la capacité radio d'un réseau de télécommunication cellulaire de type CDMA, pour la détermination de la capacité du réseau à supporter un trafic multiservices entre des postes mobiles cellulaires et une station de base avec laquelle communiquent les postes mobiles, comprenant les étapes d'estimation du facteur d'interférence inter-cellulaire du réseau, de détermination d'un niveau de puissance transmis à partir du facteur d'interférence estimé et de détermination d'une probabilité de dysfonctionnement du réseau, **caractérisé en ce qu'**on estime le facteur d'interférence sous la forme d'une variable aléatoire lognormale ou gaussienne.

2. Procédé selon la revendication 1, **caractérisé en ce qu'**il est utilisé pour la détermination de la capacité du réseau à supporter un trafic multiservices de la station de base vers les postes mobiles et **en ce que** la facteur d'interférence est estimé sous la forme d'une variable aléatoire lognormale.

3. Procédé selon la revendication 2, **caractérisé en ce qu'**il comporte les étapes consistant à :

   a) diviser chaque cellule en mailles élémentaires ;
   b) pour chaque maille, calculer la probabilité pour les postes mobiles d'être situés dans cette maille ;
   c) calculer l'espérance et la variance du facteur d'interférence ;
   d) calculer la portion de puissance de la station de base requise pour les postes mobiles, en fonction du service mis en oeuvre ;et
   e) calculer la probabilité de dysfonctionnement.

4. Procédé selon la revendication 3, **caractérisé en ce que** la probabilité de dysfonctionnement est calculée à partir de la probabilité que la puissance requise par l'ensemble des postes mobiles qui communiquent avec la station de base ne dépasse pas la puissance disponible pour la station de base, et que la puissance requise pour chaque poste mobile ne soit pas en dehors de bornes minimale et maximale.

5. Procédé selon la revendication 1, **caractérisé en ce qu'**il est utilisé pour la détermination de la capacité du réseau à supporter un trafic multiservices des postes mobiles vers la station de base, et **en ce que** le facteur d'interférence est estimé sous la forme d'une variable aléatoire gaussienne.

6. Procédé selon la revendication 5, **caractérisé en ce qu'**il comporte les étapes consistant à :

   a) fixer à zéro la moyenne et la variance de l'interférence intercellulaire ;
   b) pour la cellule centrale dans laquelle se situe la station de base considérée isolément, calculer la moyenne et la variance de la puissance reçue des postes mobiles ;
   c) affecter la valeur calculée de la moyenne et de la variance de la puissance reçue aux cellules voisines de la cellule centrale ;
   d) calculer la moyenne et la variance de l'interférence intercellulaire ;
   e) calculer la moyenne et la variance, pour chaque service, de la puissance reçue des postes mobiles, par la station de base ;
   f) calculer la probabilité de dysfonctionnement.

7. Procédé selon la revendication 6, **caractérisé en ce que** lesdites étapes sont réalisées de manière itérative et **en ce que** l'on calcule en outre une différence entre la moyenne et la variance de l'interférence intercellulaire d'une itération courante et la moyenne et la variance de l'interférence intercellulaire d'une itération précédente, l'étape de calcul de la probabilité de dysfonctionnement étant effectuée dès que ladite différence est supérieure à une valeur de seuil prédéterminée.

8. Procédé selon la revendication 6, **caractérisé en ce que** lesdites étapes sont réalisées de manière itérative et **en ce que** l'on calcule en outre une différence entre la moyenne et la variance, pour chaque service, de la puissance reçue des postes mobiles par la station de base de la cellule centrale d'une itération courante et la moyenne et la variance pour chaque service de la puissance reçue des postes mobiles par la station de base de la cellule centrale d'une itération précédente, l'étape de calcul de la probabilité de dysfonctionnement étant effectuée dès que ladite différence est inférieure à une valeur de seuil prédéterminée.

9. Procédé selon l'une quelconque des revendications 6 à 8, **caractérisé en ce qu'**au cours de l'étape de calcul de la probabilité de dysfonctionnement, on calcule la probabilité que les postes mobiles émettent à une puissance supérieure à une valeur maximale de seuil.

10. Procédé selon l'une quelconque des revendications 6 à 9, **caractérisé en ce qu'**on calcule la moyenne et la variance de l'interférence intercellulaire en utilisant des fonctions qui dépendent des effets de masque dans le réseau.

11. Procédé selon l'une quelconque des revendications 1 à 10, **caractérisé en ce que** l'on fixe un niveau de charge multiservices pour le réseau et l'on calcule la probabilité de dysfonctionnement pour ce niveau de charge.

12. Procédé selon l'une quelconque des revendications 1 à 10, **caractérisé en ce que** l'on fixe une probabilité de dysfonctionnement cible pour le réseau et un niveau de charge initial, et **en ce qu'**il comporte les étapes itératives consistant à calculer la probabilité de dysfonctionnement pour le niveau de charge initial et à modifier le niveau de charge, lesdites étapes itératives étant réalisées jusqu'à l'obtention de la probabilité de dysfonctionnement cible.

## FIG.1

```
┌──────────────┐          ┌──────────────┐
│      10      │          │      12      │
└──────┬───────┘          └──────┬───────┘
       │                         │
       └──────────┬──────────────┘
                  ▼
       ┌──────────────────────────┐
       │            14            │
       └──────────┬───────────────┘
                  │
       ┌──────────┴───────────────┐
       ▼                          ▼
┌──────────────┐          ┌──────────────┐
│      16      │          │      18      │
└──────────────┘          └──────────────┘
```

## FIG.2

```
       ┌──────────────────────────┐
       │            20            │
       └──────────┬───────────────┘
                  ▼
       ┌──────────────────────────┐
       │            22            │
       └──────────┬───────────────┘
                  ▼
       ┌──────────────────────────┐
       │            24            │
       └──────────────────────────┘
```

# FIG.3

```
┌─────────────────────────────┐
│             26              │
└─────────────────────────────┘
              │
              ▼
┌─────────────────────────────┐
│             28              │
└─────────────────────────────┘
              │
              ▼
┌─────────────────────────────┐
│             30              │
└─────────────────────────────┘
              │
              ▼
┌─────────────────────────────┐
│             32              │
└─────────────────────────────┘
              │
              ▼
        Non    ◇
      ◇───────   34   ◇
        ◇            ◇
              │ Oui
              ▼
┌─────────────────────────────┐
│             36              │
└─────────────────────────────┘
```

# FIG.4

# FIG.5

# FIG.6

```
                    ┌──────────────────────────┐
                    │           56             │◄──────────┐
                    └──────────────────────────┘           │
                                 │                          │
                                 ▼                          │
                    ┌──────────────────────────┐           │
                    │           58             │           │
                    └──────────────────────────┘           │
                                 │                          │
                                 ▼                          │
          ┌───────►┌──────────────────────────┐            │
          │        │           60             │            │
          │        └──────────────────────────┘            │
          │                     │                           │
          │                     ▼                           │
          │        ┌──────────────────────────┐            │
          │        │           62             │            │
          │        └──────────────────────────┘            │
          │                     │                           │
          │                     ▼                           │
          │   Non          ◇       ◇                        │
          └──────────────◇    64     ◇                      │
                          ◇       ◇                         │
                              │ Oui                         │
                              ▼                             │
                    ┌──────────────────────────┐           │
                    │           66             │           │
                    └──────────────────────────┘           │
                                 │                          │
                                 ▼                          │
                          ◇       ◇    Non    ┌──────────┐  │
                        ◇    68     ◇────────►│    70    │──┘
                          ◇       ◇           └──────────┘
                              │ Oui
                              ▼
                    ┌──────────────────────────┐
                    │           72             │
                    └──────────────────────────┘
```

**Office européen**
**des brevets**

**RAPPORT DE RECHERCHE EUROPEENNE**

Numéro de la demande

EP 04 29 0079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 02/082846 A (TELIA AB) 17 octobre 2002 (2002-10-17) * page 2, ligne 5 - page 36 * * figure 2 *  ----- | 1 | H04Q7/36 |
| A | SAMPATH A ET AL: "Erlang capacity of a power controlled integrated voice and data CDMA system" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 1557-1561, XP010229039 ISBN: 0-7803-3659-3 * le document en entier *  ----- | 1 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| La Haye | 9 septembre 2004 | Palencia Gutiérrez,C |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 0079

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-09-2004

| Document brevet cité au rapport de recherche | | Date de publication | Membre(s) de la famille de brevet(s) | | Date de publication |
|---|---|---|---|---|---|
| WO 02082846 | A | 17-10-2002 | SE<br>SE<br>WO | 523614 C2<br>0101206 A<br>02082846 A1 | 04-05-2004<br>04-10-2002<br>17-10-2002 |

EPO FORM P0460

Pour tout renseignement concernant cette annexe : voir Journal Officiel de l'Office européen des brevets, No.12/82